# EUROPEAN PATENT APPLICATION

(11) **EP 4 737 424 A1**
(43) Date of publication of application: **06.05.2026**
(21) Application number: 25212160.3
(22) Date of filing: 29.10.2025
(51) Int. Cl.: C04B 28/02, C04B 40/00

(54) **POWDER COMPOSITION AND SPRAY CEMENT MORTAR CONTAINING THIS COMPOSITION**

(30) Priority: 29.10.2024 PL 45015524
(71) Applicant: PCC Exol Spolka Akcyjna, 56-120 Brzeg Dolny (PL)
(72) Inventor: BRANDYS, Rafal, Wroclaw (PL); JAKOB, Alina, Wroclaw (PL)
(74) Representative: AOMB Polska Sp. z.o.o.

(57) **Abstract**

The invention relates to a powder composition and a sprayed cement mortar containing cement and an admixture in the form of said powder composition. The powder composition according to the invention contains: (a) at least one dried and powdered anionic surfactant of formula (1), (b) at least one powdered moisture-retaining agent selected from poly(ethylene glycol), methoxy poly(ethylene glycol) or mixtures thereof, and (c) at least one powdered plasticizer of formula (2):

**(ROSO₃⁻)ₓ M ^{y+}** (1)

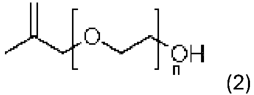

wherein the substituents in formula (1) are defined in the description.

## Description

### Field of invention

The invention relates to a powder composition containing at least one anionic surfactant, at least one moisture-retaining agent and at least one plasticizing agent, as well as to a sprayed cement mortar containing this composition. The powder composition according to the invention finds use in particular as an admixture for sprayed cement mortars.

### State of the art

The cement mortar and concrete are a type of composite created by mixing binder, aggregate, water, and various additives and admixtures that significantly influence its properties. The formula is determined based on specialized laboratory analyses to achieve, among other things, appropriate strength and resistance to external factors. Importantly, the parameters of concrete and cement mortars depend not only on their ingredients but also on the method of application and use.

The mortars, or sprayed concrete, are materials used primarily for structural repairs. These materials are used to renovate concrete and reinforced concrete elements. The sprayed mortar (also referred to as shotcrete) is characterized by high resistance to abrasion and external atmospheric factors, and is also extremely resistant to carbonation.

The sprayed mortar is a method called shotcreting, namely a rather specific method of applying a mixture using pneumatic spraying. This process involves spraying the mortar onto the surface at a high speed, which positively impacts the strength and effective sealing. Spraying is performed using a special machine - a shotcreting machine - and the method can be performed wet or dry.

The wet method is primarily used when large quantities of sprayed material are required; it is effective and relatively inexpensive. The wet shotcreting involves transporting the prepared, moistened mixture to a special device, where it is sprayed onto a surface using compressed air. This method allows to avoid dusting and applying of too thin layers of material.

The dry method, on the other hand, is recommended when ready-mixed concrete cannot be delivered quickly and in areas where the aesthetics of the finished surface are important. Dry shotcreting requires the addition of water to the mix only during the spraying stage. The dry cement and aggregate mixture is introduced into the machine and then transported through pipes to a spray nozzle, where it is moistened with water. Maintaining the correct water-to-mix ratio is crucial here, allowing for the desired density.

Spraying allows the material to be applied to various hard-to-reach areas, such as ceiling surfaces. The mortar should be applied to the surface in circular motions, holding the nozzle at a right angle and approximately 1.5 m from the surface. The shaping possibilities of this material are virtually limitless, making it suitable for use in a variety of structures. Shotcreting is used in hydraulic structures, bridges, retaining walls, tunnels, and slopes; it is useful not only for constructing new structures but also for reinforcing existing structures.

Currently, shotcreting encounters numerous challenges during both the spraying and subsequent setting stages. The sprayed mortars require appropriate rheology-modifying admixtures to facilitate pumping. The sprayed material must also exhibit adequate adhesion to the surface. The mortar cannot set too quickly or exhibit bleeding (water escaping from the cement mass), as this can cause cracking. Therefore, the admixture ingredients must be designed to ensure the final mortar has the appropriate viscosity and does not run off the sprayed surface. This presents a significant challenge for the mortar formulator, as the operator must handle the sprayed material efficiently and, equally importantly, as conveniently as possible.

Some additives to the cement mixtures are known in the art.

For example, the patent application US2019/0210921 A1 discloses a modified cellulose powder additive that allows for viscosity control, reduces cracking of the set material, and improves the homogeneity of fresh cement mixes. This application also discloses a composition containing such an additive/admixture.

The patent application IN201921041082A describes a formulation for a multi-component superplasticizer based on polycarboxyether (PCE) that allows for control of workability, reduces concrete cracking, and increases its final strength. This publication describes the composition of the superplasticizer admixture.

The patent application WO2008150604A1 discloses a composition for modifying the rheological properties of cement mortar, containing (i) a biopolymer, (ii) an anionic surfactant, and (iii) a cationic or amphoteric surfactant. In one embodiment, the composition contains sodium dodecyl sulfate as the anionic surfactant and further contains poly(ethylene glycol) as a further additive.

Furthermore, the patent application CN114685085A describes an admixture for cement mortar prepared using wet technology, containing an anionic surfactant belonging to the branched alkyl sulphates.

The patent application WO2018052110A1 in turn discloses an antifoam composition for a hydraulic composition, the antifoam composition containing an anionic surfactant (A), for example selected from an ammonium alkyl sulfate and an alkali metal alkyl sulfate, wherein in said alkyl sulfate the alkyl chain contains from 10 to 18 carbon atoms, and an antifoam agent (B), such as polypropylene glycol.

Finally, the patent application EP2522643A1 describes a hydraulic material composition containing a cement and an agent for reducing the shrinkage of the hydraulic material, providing resistance to freezing and thawing, which contains at least one polyoxyalkylene, which may be in particular poly(alkylene glycol), poly(propylene glycol) or a mixture thereof. As an air-entraining admixture, the hydraulic material composition may contain, among others, lauryl sulfate or alkanesulfonate.

The above patent documents concern liquid additives that positively influence the properties of fresh cement and concrete mortars, such as viscosity and density, as well as the properties of the resulting surface, such as crack resistance and strength. However, there is a need to develop a mortar additive in the form of a dry powder composition that, in addition to protecting against cracking during setting, would enable improved pumpability of fresh mortar and improve its aeration and adhesion to the surface.

Unexpectedly, it turned out that the dry powder composition obtained in the present invention enables pumping of fresh cement mixtures, which were previously classified as difficult to pump, and the bonded material is characterized by a significant improvement in strength compared to the effects obtained using additives for cement mixtures known in the art.

### Discussion of the summery of the invention

In a first aspect the object of the invention is a powder composition containing:
(a) at least one dried and powdered anionic surfactant of formula (1):

   **(ROSO₃⁻**)**ₓM**^{**y**+} (1)

   Where:
   **R** is a linear and/or branched alkyl chain with an average number of carbon atoms of 8 to 16,
   x means 1 or 2,
   **M^{y+}** represents a mono- or divalent cation, where y = x,
   in an amount of 1-28% by weight of the total weight of the composition,
(b) at least one powdered moisture-retaining agent selected from poly(ethylene glycol), methoxypoly(ethylene glycol) or a mixture thereof, in an amount of 62-98 % by weight of the total weight of the composition,
(c) at least one powdered plasticizing agent of formula (2) 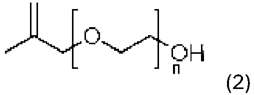 where n is an average number of oxyethylene monomers and ranges from 21 to 135
   in the amount of 1-10% by weight of the total weight of the composition
   wherein the sum of all components of the composition is 100% by weight.

Preferably, the moisture-retaining agent (b) has a weight average molecular weight (Mw) of from 1000 Da to 12000 Da, more preferably from 2000 to 8000 Da, and even more preferably from 2000 to 6000 Da, determined in accordance with the method as described in the description based on the DIN 55672-1 standard.

Preferably, the moisture-retaining agent (b) has water content of up to 6.0% by weight.

Preferably, the content of anionic surfactant (a) is from 1.0 to 20.0% by weight of the total weight of the composition.

Preferably, the average number of carbon atoms in the alkyl chain R in formula (1) is from 10 to 16 atoms, and more preferably from 12 to 16 atoms.

Preferably in formula (1) M^{y+} is a cation selected from an ammonium cation and a metal cation selected from Na, K, Zn, Ca and Mg, or a combination of these cations, wherein particularly preferably M^{y+} represents a sodium or potassium cation.

Preferably the anionic surfactant (a) has water content of up to 6.0% by weight.

Preferably, the plasticizer agent (c) has the weight average molecular weight (Mw) of from 1000 Da to 6000 Da, and even more preferably from 2200 Da to 5500 Da, wherein Mw is determined by the method indicated below.

Preferably, the plasticizer (c) has water content of up to 6.0% by weight.

Preferably, the content of the plasticizing agent (c) is from 2.0 to 8.0% by weight of the total weight of the composition.

In a second aspect, the invention relates to a sprayed cement mortar containing cement and an admixture, wherein the admixture is the powder composition according to the first aspect of the invention as defined above.

Preferably, the content of the powder composition according to the first aspect of the invention in the sprayed cement mortar according to the second aspect of the invention is up to 5% by weight based on the weight of cement, preferably up to 1% by weight based on the weight of cement. In a preferred case, the sprayed cement mortar according to the second aspect of the invention is shotcrete. Preferably, in the sprayed cement mortar according to the second aspect of the invention, the minimum cement content in the mortar is 300 kg/m^{3,} wherein the cement is a CEM I 42,5R cement class, a CEM I 52,5R cement class or a mixture thereof. Preferably, in the sprayed cement mortar according to the second aspect of the invention, the water-cement ratio w/c is in the range of 0.33 - 0.53. Preferably, the sprayed cement mortar according to the second aspect of the invention contains an aggregate with a particle diameter of no more than 12 mm, and preferably less than 6 mm.

### Advantages of the invention

The powder composition according to the present invention constitutes an additive for sprayed mortars. This specialized admixture in a dry form allows for modification of the sprayed material's parameters and significantly simplifies its preparation. By carefully selecting the composition's components, it is possible to improve the properties of the shotcrete. The addition of a high-molecular-weight moisture-retaining agent allows for better mixing of the ingredients and improved pumpability of the mixture. It also prevents cracking during mortar setting by acting as a shrinkage reducer. Consequently, it simultaneously increases the mortar's plasticity and limits water escape from the applied cement layer. The addition of surfactants, acting as air-entraining agents, enables adhesion control. It also works synergistically with the moisture-retaining agent, causing the mortar to plasticize by introducing air bubbles. Operating on a principle similar to that of ball bearings, these bubbles facilitate easier pumping of the mortar and facilitate its application to any surface. Additionally, due to the aeration and, consequently, proper loosening of the mortar, its adhesion to the surface to which it is applied is improved and its run-off is reduced. As a result, the powder mixture composition according to the invention allows for the production of a high-quality material that is significantly easier to apply.

An important aspect of the recipe is its powder form, which allows it to be used as an admixture, e.g. for dry mortars in bags, where liquid admixtures are not applicable.

### Detailed description of the invention

The following terminology is used in the present invention:
For the purposes of the present invention, the term "powder composition" is synonymous with the terms "powder mix/mixture" and "admixture" and these terms may be used interchangeably.

For the purposes of this invention, the term "cementitious material" means concrete or cement mortar and sprayed composites, i.e. shotcrete, produced based on them. This term applies to both dry (powder, prior to use) and wet (fresh) and set (ready-hardened) compositions.

As indicated above, the object of the invention is a powder composition that serves as an admixture for cement-containing materials (e.g., concrete mixes and mortars). This composition is solvent-free and is designed to improve the pumpability of mortars and increase their adhesion to the surface to which they are applied.

The composition of the powder composition is crucial to providing such properties. As indicated above, the powder composition according to the invention contains: (a) at least one anionic surfactant, (b) at least one moisture-retaining agent, and (c) at least one plasticizing agent, wherein each of these three types of components is in a powder form.

The first key component of the composition is (a) an anionic surfactant: an alkyl alcohol sulfate in the form of a salt of formula (1) as defined above, such as, for example, a mixture of sodium sulfates of C8 and C10 alcohols or a mixture of sodium sulfates of C10-C16 alcohols. At least one such anionic surfactant may be present in the powder composition of the invention, but in certain embodiments it is preferred that the composition contains two or more such surfactants. It is also important that the surfactant of the invention has a low water content, preferably up to 6% by weight of the powder composition.

Alkyl alcohol sulfate / a mixture of such sulfates in the form of a salt of formula (1) has a high aeration capacity in cement-containing materials: it introduces fine, evenly distributed, and time-stable air bubbles. Its addition enables aeration of the mortar up to an air content of 10 to 30% by volume of air, such as, for example, 17% or 25% by volume of air, with this effect also depending on the intensity and duration of mixing of the fresh mortar with the admixture.

The anionic surfactant of formula (1) as defined above is present in the powder composition in an amount of from 1 to 28% by weight, preferably from 1 to 20% by weight, such as in an amount of 1% by weight, 10% by weight or 20% by weight, each based on the total weight of the composition.

The second key component of the powder composition is a moisture-retaining agent (b): poly(ethylene glycol) (PEG), methoxy poly(ethylene glycol) (MPEG), or a mixture thereof. The weight average molecular weight (Mw) of this component is preferably in the range of 1000-12000 Da, more preferably 2000-8000 Da, and even more preferably 2000-6000 Da. Such a molecular weight Mw enables component (b) to be easily ground and prevents caking of the powder composition. Also important is the low water content of the moisture-retaining agent (b) according to the invention, which preferably amounts to up to 6% by weight of the powder composition.

The general structural formula of PEG is as follows: 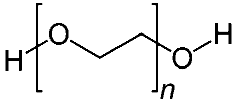 and MPEG as follows: 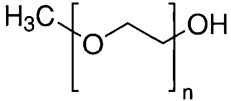 where n is the average number of oxyethylene monomers

The content of moisture-retaining agent (b) in the powder composition is from 62 to 98% by weight, preferably from 90 to 98% by weight.

The third key component of the powder composition according to the invention is a plasticizing agent (c) of formula (2) defined above. Such compounds, often referred to as H-PEG, belong to the group of ethoxylated methallyl alcohols. Preferably, the plasticizing agent has a weight average molecular weight (Mw) of 1000 to 6000 Da, and more preferably of 2200 to 5500 Da, wherein the Mw is determined by the method indicated below. Such a molecular weight Mw enables adequate plasticization of the cementitious material. The plasticizing agent (c) is fully compatible with the anionic surfactant (a), without causing a change in the air entrainment of the cement mortar while maintaining the appropriate consistency of the sprayed material. The low water content of the plasticizing agent (c) used in the composition according to the invention, which is up to 5% by weight, is also important.

The powder composition according to the first aspect of the invention may also contain other additional ingredients, such as superplasticizers or setting accelerators.

This composition is prepared by mixing the mandatory components (a), (b) and (c) (and optionally also other additional components) at a low rotation frequency, preferably from 10 to 150 rpm, and for example 120 rpm.

As mentioned above, the powder composition according to the first aspect of the invention can be used as an admixture in cement mortars, preferably sprayed mortars, i.e. shotcrete. The content of the powder composition in the mortar does not exceed 6% by weight, and preferably is from 0.01% to 4% by weight of the total weight of the mortar. The powder form of the composition according to the present invention facilitates the use of the composition in cement-based materials, as it allows for easy mixing with dry cement mortar.

According to the invention, the word "about" used above and below is to be understood as a deviation of +/- 5% from the stated value, reflecting inaccuracies that may occur, for example, when measuring the ingredients of the composition.

### Examples

The tests were performed on cement mortar containing CEM I 42,5R, aggregate 2 and 6 mm and w/c = 0.5 using the wet method [where w/c means in accordance with the PN-EN 206:2014 standard "Concrete - requirements, properties, production and compliance", w/c means the water-cement ratio, i.e. the ratio of the effective water content to the cement content in the concrete mix].

### Example 1 (production of powder composition)

To prepare the powder composition, a 2-liter blender was used, which allowed for thorough mixing of the ingredients. Preparation of the composition took place at room temperature (18-24°C).
a) Poly(ethylene glycol) with a weight average molecular weight (Mw) of 1000 Da was introduced into the blender in the form of a powder in an amount of 85% by weight of the composition, the Mw of this component being determined by the method indicated below.
b) Sodium C12-C16 alcohol sulfate (a mixture containing 72% by weight of the C12 fraction, 25% by weight of the C14 fraction and 3% by weight of the C16 fraction) was added in the form of a powder in the amount of 8% by weight of the composition,
c) H-PEG having a weight average molecular weight (Mw) of 2400 Da was added in powder form at 7% by weight of the composition, the Mw of this component being determined by the method indicated below.
d) The ingredients were mixed for 2 minutes at a rotation frequency of 120 rpm.

The powder composition was obtained, but it was susceptible to a slight clumping. This clumping is an undesirable property caused by the low molecular weight of poly(ethylene glycol), which melts near room temperature. The composition was clumped to a degree small enough to allow it to be subjected to further testing.

### Example 2 (use of the powder composition)

The powder composition obtained in Example 1 was added to cement mortar at 1% by weight of the cement and mixed using Controls planetary mortar mixer. A high air-entraining effect of 25% air by volume was achieved. The cementitious material did not crack during setting. The material was slightly too plastic, and therefore a small portion of the mass flowed off the vertical test surface, likely due to the excessive air content and the addition of a plasticizer (H-PEG).

### Example 3 (manufacture of the powder composition)

The powder composition was prepared as in Example 1, but poly(ethylene glycol) with a different weight average molecular weight (8000 Da) was used, wherein the Mw was determined by the method indicated below:
a) Poly(ethylene glycol) with a weight average molecular weight (Mw) of 8000 Da was introduced into the blender in the form of a powder in an amount of 85% by weight of the composition, wherein Mw was determined by the method indicated below,
b) C12-C16 alcohol sulfate (a mixture containing 72% by weight of the C12 fraction, 25% by weight of the C14 fraction and 3% by weight of the C16 fraction) was added in the form of a powder in the amount of 8% by weight of the composition,
c) H-PEG having a weight average molecular weight (Mw) of 2400 Da was added in powder form at 7% by weight of the composition, wherein the Mw was determined by the method indicated below.
d) The ingredients were mixed for 2 minutes at a low rotation frequency of 120 rpm.

The powder composition with the desired consistency was obtained. The product was not susceptible to clumping due to the use of high molecular weight PEG (8000 Da), whose melting point was far from room temperature, approximately 55°C.

### Example 4 (use of the powder composition)

The composition obtained in Example 3 was added to cement mortar at 1% by weight of the cement and mixed using Controls planetary mortar mixer. A high air-entraining effect of 24% air was achieved. It was found that the molecular weight of poly(ethylene glycol) does not significantly affect the air-entrainment of cement mortars. The cementitious material did not crack during setting, but adhesion to the test surface was still slightly weakened, with some of the material running off several millimeters before setting began.

### Example 5 (manufacture of the powder composition)

The powder composition was prepared as in Example 3, but the type and amount of anionic surfactant were changed :
a) Poly(ethylene glycol) with a weight average molecular weight (Mw) of 8000 Da was introduced into the blender in the form of a powder in an amount of 92% by weight of the composition, wherein Mw was determined by the method indicated below,
b) Sodium C12-C16 alcohol sulfate (a mixture containing 72% by weight of the C12 fraction, 25% by weight of the C14 fraction and 3% by weight of the C16 fraction) was added in the form of a powder in the amount of 1% by weight of the composition,
c) H-PEG with a weight average molecular weight (Mw) of 2000 Da was added in powder form in an amount of 7% by weight of the composition, the Mw being determined by the method indicated below,
d) The ingredients were mixed for 2 minutes at a low rotation frequency of 120 rpm.

The steps were carried out at room temperature. A powder composition with an appropriate consistency was obtained, i.e., a bulk density of 0.3-0.6 g/cm3. The product was not susceptible to clumping due to the high molecular weight of PEG (8000 Da) and its sufficiently large proportion in the mixture.

### Example 6 (use of the powder composition)

The composition obtained in Example 5 was added to cement mortar at 1% by weight of the cement and mixed using a Controls mortar mixer. An air-entraining effect of 9% air was achieved. This air-entraining effect was reduced by reducing the amount of surfactant in the powder composition. The material still did not crack and had good adhesion without any visible decrease during the setting process.

Additionally, the composition obtained in Example 5 was added to the cement mortar in an amount of 5% by weight. An air-entraining effect of 20% was achieved. The material did not crack, however, an allowable run-off of approximately 3 centimeters of material was observed, which indicates a slight weakening of adhesion due to the large amount of poly(ethylene glycol) and H-PEG in the shotcrete.

### Example 7 (manufacture of the powder composition)

The powder composition was prepared as in Example 5, but the carbon distribution of the anionic surfactant was changed and a moisture-retaining agent with a different molecular weight (4000 Da) was used, the products were mixed in a different amount:
a) Poly(ethylene glycol) with a weight average molecular weight (Mw) of 4000 Da was introduced into the blender in the form of a powder in an amount of 91% by weight of the composition, wherein Mw was determined by the method indicated below.
b) Sodium C8-C10 alcohol sulfate (a mixture containing 50% by weight of the C8 fraction and 50% by weight of the C10 fraction) was added in powder form in an amount of 2% by weight of the composition,
c) H-PEG having a weight average molecular weight (Mw) of 2400 Da was added in powder form at 7% by weight of the composition, the Mw being determined by the method indicated below.
d) The ingredients were mixed for 2 minutes at a low rotation frequency of 120 rpm.

The steps were carried out at room temperature. The powder composition with the desired consistency and bulk density within the required range of 0.3-0.6 g/cm³ was obtained. The product was not susceptible to clumping despite the use of a lower molecular weight poly(ethylene glycol) of 4000 Da.

### Example 8 (use of the powder composition)

The composition obtained in Example 7 was added to a cement mortar at 1% by weight of the cement and mixed using Controls mortar mixer. The air-entraining effect was changed by a slight increase in the surfactant content, reaching 18% air. The cementitious material did not crack during the setting stage and had good adhesion.

### Example 9

The powder composition was prepared as in Example 7, but the type of moisture-retaining agent was changed:
a) Methoxylated poly(ethylene glycol) having a weight average molecular weight (Mw) of 4000 Da was introduced into the blender in the powder form in an amount of 91% by weight of the composition, wherein Mw was determined by the method indicated below.
b) Sodium C8-C10 alcohol sulfate (a mixture containing 50% by weight of the C8 fraction and 50% by weight of the C10 fraction) was added in powder form in an amount of 2% by weight of the composition,
c) H-PEG having a weight average molecular weight (Mw) of 2400 Da was added in the powder form at 7% by weight of the composition, the Mw being determined by the method indicated below.
d) The ingredients were mixed for 2 minutes at a low rotation frequency of 120 rpm.

The powder composition of the desired consistency was obtained, i.e. in the range of 0.3-0.6 g/cm^{3.} The product was not susceptible to clumping when using methoxylated poly(ethylene glycol) with a molecular weight of 4000 Da.

### Example 10 (use of the powder composition)

The composition obtained in Example 9 was added to cement mortar at 1% by weight of the cement and mixed using Controls mortar mixer. The air-entraining effect was 17%. The material did not crack after the setting stage and demonstrated adequate adhesion to the vertical test surface. The adequate adhesion was defined as no visible run-off of the fresh material after spraying onto a vertical concrete surface until the material had fully set.

### Example 11 (manufacture of the powder composition)

The powder composition was prepared as in Example 9, but the type of plasticizing agent was changed :
a) Methoxylated poly(ethylene glycol) having a weight average molecular weight (Mw) of 4000 Da was introduced into the blender in the powder form in an amount of 91% by weight of the composition, wherein Mw was determined by the method indicated below.
b) Sodium C8-C10 alcohol sulfate (a mixture containing 50% by weight of the C8 fraction and 50% by weight of the C10 fraction) was added in powder form in an amount of 2% by weight of the composition.
c) H-PEG having a weight average molecular weight (Mw) of 4000 Da was added in powder form at 7% by weight of the composition, wherein Mw was determined by the method indicated below.
d) The ingredients were mixed for 2 minutes at a low rotation frequency of 120 rpm.

### Example 13 (use of the powder composition)

The composition obtained in Example 11 was added to cement mortar at 1% by weight of the cement and mixed using Controls mortar mixer. The air-entraining effect was 17%. The material did not crack after the setting stage, but exhibited significantly weaker adhesion to the vertical test surface.

### Results

To sum up the tests described above, in order to obtain the appropriate properties of the powder composition and the mortar obtained with it, the moisture-retaining agent (poly(ethylene glycol) or methoxy poly(ethylene glycol)) should not have a weight average molecular weight lower than 1000 Da due to the likelihood of clumping of the overall powder composition.

The air entrainment effect is strongly dependent on the content of surfactant (such as anionic surfactant of formula (1), i.e. from the group containing sodium salts of sulphated C8-C10 alcohols or sodium salts of sulphated C12-C16 alcohols) in the powder composition, while the air content is not influenced by the type and mass of the moisture-retaining agent used. The tests should be performed at the same mixing speed with cement mortar, because the mixing speed and time strongly influence the subsequent air content.

According to research, the weight-average molecular weight of the plasticizing agent should be below 4000 Da or the proportion of this agent should be less than 7% by weight of the composition. The plasticizing additive allows for the introduction of an additional mechanism for plasticizing the cement mass into the formulation, and surprisingly, it does not cause changes in the air content, which is unusual for standard plasticizing agents.

Based on application tests, it was determined that in each case, regardless of the specific quantitative composition of the powder composition according to the invention, the plasticity and pumpability (tested using a shotcrete machine) of the resulting admixed cement mortar were adequate. The mortar exhibited good adhesion to the surface to which it was applied, although excessive plasticization of the cement mass occurred in cases of excessively high air content (25% by volume), resulting in reduced adhesion, which resulted in mortar running off the surface to which it was applied. These results also indicate that the powder composition may also be suitable for dry shotcreting, as evidenced by improved pumpability and adhesion parameters.

Weight-average molecular weight molecular weight, Mw) in the context of this application and all embodiments was determined using the internal method MB-ERCH-058 and confirmed on the basis of the hydroxyl number tests using the potentiometric method according to the Polish standard "PN-EN13926:2004 Surfactants - oxyalkylenated derivatives - Determination of the hydroxyl number by the method using N- methylimidazole ". In particular, Mw was determined using Gel Permeation Chromatography (GPC) Permeation Chromatography) on a Phenogel 5µm 50 Å 7.8x300mm column and a Phenogel 5µm 500 Å 7.8x300mm column, using tetrahydrofuran solvent, poly(ethylene glycol) standard and mass range 100-12K Da, refractometric detector - XPEG sample. The test was performed based on DIN 55672-1.

## Claims

1. A powder composition, **characterized in that** it contains:
(a) at least one dried and powdered anionic surfactant of formula (1):
**(ROSO₃⁻**)ₓM^{y+} (1)
wherein:
**R** is a linear and/or branched alkyl chain with an average number of carbon atoms of 8 to 16,
x means 1 or 2,
**M^{y+}** represents a mono- or divalent cation, wherein y = x
in an amount of 1-28% by weight of the total weight of the composition,
(b) at least one powdered moisture-retaining agent selected from poly(ethylene glycol), methoxy poly(ethylene glycol) or mixtures thereof, in an amount of 62-98% by weight of the total weight of the composition, and
(c) at least one powdered plasticizer of formula (2): 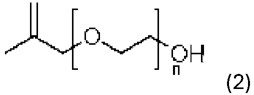
where n is the average number of oxyethylene monomers and ranges from 21 to 135
in the amount of 1-10% by weight of the total weight of the composition
wherein the sum of all components of the composition is 100% by weight.

2. The composition according to claim 1, **characterized in that** the moisture-retaining agent (b) has a weight average molecular weight (Mw) of 1000 Da to 12000 Da, determined in accordance with the method as described herein based on the DIN 55672-1 standard.

3. The composition according to claim 2, **characterized in that** the moisture-retaining agent (b) has the weight average molecular weight (Mw) of 2000 to 8000 Da.

4. The composition according to claim 3, **characterized in that** the moisture-retaining agent (b) has the weight average molecular weight (Mw) of from 2000 to 6000 Da.

5. The composition according to one of claims 1-4, **characterized in that** the moisture-retaining agent (b) has water content of up to 6.0% by weight.

6. The composition according to one of claims 1-5, **characterized in that** the content of the anionic surfactant (a) is from 1.0-20.0% by weight of the total weight of the composition.

7. The composition according to one of claims 1-6, **characterized in that** the average number of carbon atoms in the alkyl chain R in formula (1) is from 10 to 16.

8. The composition according to claim 7, **characterized in that** the average number of carbon atoms in the alkyl chain R in formula (1) is from 12 to 16.

9. The composition position according to one of claims 1-8, **characterized in that** in formula (1) M^{y+} represents a cation selected from an ammonium cation and a metal cation selected from Na, K, Zn, Ca and Mg, or a combination of these cations.

10. The composition according to claim 9, **characterized in that** in formula (1) M^{y+} represents a sodium or potassium cation.

11. The composition according to one of claims 1-10, **characterized in that** the anionic surfactant (a) has water content of up to 6.0% by weight.

12. The composition according to any one of claims 1-11, **characterized in that** the plasticizer (c) has the weight average molecular weight (Mw) of from 1000 Da to 6000 Da.

13. The composition according to claim 12, **characterized in that** the plasticizer (c) has the weight average molecular weight (Mw) of from 2200 Da to 5500 Da.

14. The composition according to one of claims 1-13, **characterized in that** the plasticizer (c) has water content of up to 6.0% by weight.

15. The composition according to one of claims 1-5, **characterized in that** the content of the plasticizer (c) is from 2.0 to 8.0% by weight of the total weight of the composition.

16. A sprayed cement mortar containing cement and an admixture, **characterized in that** the admixture is the powder composition according to any one of claims 1-15.

17. The sprayed cement mortar according to claim 16, **characterized in that** the content of the powder composition in the mortar is up to 5% by weight relative to the weight of the cement, preferably up to 1% by weight relative to the weight of the cement.

18. The sprayed cement mortar according to claim 16 or 17, **characterized in that** it is shotcrete.

19. The sprayed cement mortar according to one of claims 16-18, **characterized in that** the minimum cement content in the mortar is 300 kg/m³, wherein the cement is a cement of class CEM I 42,5R, a cement of class CEM I 52,5R or a mixture thereof.

20. The sprayed cement mortar according to one of claims 16-19, **characterized in that** the water -cement ratio w/c is in the range of 0.33 - 0.53.

21. The sprayed cement mortar according to one of claims 16-20, **characterized in that** it contains aggregate with a particle diameter of not more than 12 mm, and preferably less than 6 mm.
